# EUROPEAN PATENT APPLICATION

(11) **EP 2 816 782 A1**
(43) Date of publication of application: **24.12.2014**
(21) Application number: 13305819.8
(22) Date of filing: 18.06.2013
(51) Int. Cl.: H04L 29/08, H04L 29/06

(54) **Node and methods for use in TCP friendly HAS content distribution systems**

(71) Applicant: ALCATEL LUCENT, 92100 Boulogne-Billancourt (FR)
(72) Inventor: De Vleeschauwer, Danny, 9940 Evergem (BE); De Vriendt, Johan, 9051 Afsnee (BE)
(74) Representative: D'Halleweyn, Nele Veerle Trees Gertrudis

(57) **Abstract**

An electronic client node suited for use in a streaming content delivery system, and adapted for receiving transmitted information at request from at least one server node via a telecommunication network; transmitting information related to a part of content during a time window into the network, the duration of said time window being determined by a network control method, further comprising a network congestion avoidance control method; transmitting a control signal (90) to thereby indicate a measure of its average requested throughput, preferably to said server node, said control signal being suited for use in said network congestion control method.

## Description

### Field of the invention

The present invention relates to the field of HAS content distribution systems.

### Background

A method to deliver video over IP (Internet Protocol)-based networks is HAS (HTTP (Hyper Text Transport Protocol) Adaptive Streaming). This method has the advantage that it is easily deployable, because (i) it traverses firewalls and NATs (Network Address Translators) more easily than UDP/RTP (User Datagram Protocol/Real-time Transport Protocol) based video delivery, (ii) it has inherent congestion control as it relies on TCP (Transport Control Protocol) and it can make use of the available HTTP infrastructure, in particular, of HTTP caches and CDN (Content Distribution Network) nodes.

However the above system is not TCP friendly, leading to loss of efficiency.

### Summary

It is an object of embodiments of the invention to gain in efficiency.

It is a first aspect of the invention to provide a client system, device or node suited for use in a content delivery system, adapted for receiving transmitted information, said information being provided from at least one server node at request, adapted for transmitting information related to a part of content during a time window over the network, the duration of said time window being determined by a network control method, further comprising a network congestion avoidance control method, the client node further being adapted for transmitting a control signal, for instance AWND (announced window) of TCP, to thereby indicate a measure of its average requested throughput to said server node, said control signal being suited for being actively, and/or dynamically used in said control method, in particular in said network congestion avoidance control method. The content is assumed to be provided in parts of content also denoted segments, optionally said parts or segments can be provided in one or more versions related to a difference in quality, such versions can related to a difference in encoding, hence can be different encoded layers. Further the above outline of the invention refers to an embodiment whereby the network control and/or network congestion avoidance control method runs on said server and hence the client sends the control signal thereto. Obviously the network control methods can be partly or entirely executed by another further node to which the client then at least must send also the control signal too.

In the above and further aspects of the invention the client system is an electronic system; and/or the content is typically streaming content and/or multimedia content, such as video and/or audio. It is especially in streaming content context that the TCP friendly advantage of the invention over prior-art solutions occurs. The delivery system is operable over a network. The client node can be connected directly or indirectly via a telecommunication network.

In an embodiment of this first aspect of the invention the client node is either capable of displaying said content itself or is a node, which can be (uniquely) associated to a further node (the real client) which is capable of displaying said content, whereby the client node is capable of representing, for instance by emulating, said further node.

In a further embodiment of this first aspect the client node or said further node has a content display means and/or temporally content storage means.

In a preferred embodiment of the invention the client node is adapted to generate said control signal such that use thereof ensures that the time gap between the transmitting of said parts of content is less than the time-out defined by the network control method.

In a preferred embodiment of the invention the client node is adapted to generate said control signal such that the use of said control signal enables said network congestion avoidance control method to operate based on both the available throughput in the network and the throughput requested by the client node.

In a further preferred embodiment of the time gap embodiment discussed above the client node is adapted to generate said control signal such that the use of the control signal is selected such that the bit rate required for said part of content converges to the client goodput (i.e., the rate at which the client receives the content on average over the duration of the time window) without longer than a predetermined period using a zero instantaneous rate, at which the client receives the content over the duration of the time window, optionally said bit rate required for said part of content converges to the client goodput up to a safety margin, whereby the safety margin is based on the size of temporally content storage means.

In an exemplary embodiment thereof the bit rate required by said part of the content is chosen before the control signal is chosen. This bit rate is chosen based on the part of the interval where the signal is not active, i.e., where the goodput is sensed. It is precisely because this bit rate is usually chosen smaller than measured goodput that there risk to be gaps (larger than the timeout) and that in the part of the interval where the control signal is active that the goodput is kept lower than the goodput that TCP (the "network control method") would reach if the control signal is not used. So, the logic in the algorithm is: (1) Measure goodput over the part of the interval where the control signal is effectively inactive (AWND large), (2) Select the bit rate of the chunk to download based on this measured value (which is usually chosen smaller than the measured goodput), (3) adjust the control signal such that the gap that normally would occur does not occur any more.

Note that goodput is the amount of useful bytes (or bits) per second the client receives, while throughput is the amount of packets it receives, including the TCP retransmits and headers. So, goodput and throughput are more or less equivalent and the invention can be expressed in terms of both quantities.

The one or more preferred embodiments can and are preferably combined.

In an exemplary implementation of the client node, the client node is adapted to continuously maintain at least (a) a first signal, for instance AWND of TCP signal, used as said control signal to close the gap that would otherwise occur,; (b) a second, for instance CWND of TCP, signal; representative for the available throughput, whereby the first signal being determined by the client node, the second signal either being determined by the client node (client node also running said network congestion avoidance control method of said server node in parallel or received from the server node).

In an exemplary implementation of the client node, the client node is adapted in that the control signal selected such that it can be used in said control method only during a portion of said time window (said portion being of variable duration) to establish that said control method operates on a client node requested throughput basis while during the other portion of said time window said control method operates on available throughput basis, preferably said client node is adapted to also determine the duration of said portion of said time window.

It is a second aspect of the invention to provide a content delivery system, comprising (1) a telecommunication network, connecting directly or indirectly at least a server node and a client node; wherein (1) at least one server node of said at least one server nodes is adapted for transmitting a part of content during a time window into the network, the duration of said time window being determined by a network control method, said network control method further comprising a network congestion avoidance control method; (2) at least one client node of said at least one client nodes is adapted for receiving said part of content and further being adapted for transmitting a control signal, for instance AWND of TCP, to thereby indicate a measure of its on average requested throughput to said one server node of said at least one server nodes, said control signal is actively and/or dynamically used in said control method, in particular in said network congestion avoidance control method.

The above description embodiments, preferred embodiments and exemplary embodiments of said client nodes can obviously be used in the network just described.

In a preferred embodiment of the invention the network and/or server node and/or the network control and/or network congestion control methods are adapted in that use of the control signal ensures that the time gap between the transmitting of said parts of content is less than the time-out defined by the network control method, for instance the RTO (retransmit Time-Out) timer of TCP.

In another preferred embodiment of the invention the network and/or server node and/or the network control and/or network congestion control methods are adapted such that the use of said control signal enables said network congestion avoidance control method to operate based on both the available throughput in the network and the throughput requested by the client node.

In another preferred embodiment of this time gap embodiment of the invention the network and/or server node and/or the network control and/or network congestion control methods are adapted such that the use of the control signal ensures that the bit rate required for said part of content converges to the client goodput ( without during a predetermined time period using a zero instantaneous rate at which the client receives the content over the duration of the time window, (i.e., the rate at which the client receives the content on average over the duration of the time window, optionally said bit rate required for said part of content converges to the client goodput up to a safety margin, whereby the safety margin is based on the size of temporally content storage means).

The one or more preferred embodiments can and are preferably combined.

In an exemplary implementation the network and/or server node and/or the network control and/or network congestion control methods are adapted in that the use of the control signal is used in said control method only during a portion of said time window (said portion being of variable duration) to establish that said control method operates on a client node requested throughput basis while during the other portion of said time window said control method operates on available throughput basis, preferably said adaptations also enable determining the duration of said portion of said time window.

In another exemplary embodiment the content (video) delivery system is further adapted in that said use of said control signal in said control method becomes operational only in steady state.

In an embodiment of the invention the client and/or server node are adapted to use for the communication (between the client and/or server nodes and/or intermediate nodes) a communication protocol expecting responses to request within a predetermined time frame (related to the transmission protocol operable on the network).

In an embodiment of the invention the client and/or server nodes are operable in a network being arranged to support selection of an appropriate version (denoted a chunk for video) (related to selecting a possible quality of display of the content) on a per part basis (denoted per segment or a plurality of segments for video) to thereby support so-called adaptive streaming.

In an embodiment of the invention the client and/or server nodes are arranged to receive and transmit said content in packetized format (IP).

One or more of the mentioned embodiments can be combined and preferably the client and/or server nodes are adapted to operate in an Internet Protocol based network using Hyper Text Transport Protocol Adaptive Streaming to deliver content (such as video and/or audio), more in particular the proposed method provides a TCP friendly HTTP adaptive streaming client.

In a third aspect of the invention a method is provided for (streaming) (multimedia) content (video and/or audio data) transmission: the method comprises at a server node the steps of: receiving from a client node a control signal indicating its requested throughput; performing a network control method to determine a time window for transmitting information, the network control method further comprising a network congestion avoidance control method based on said control signal; transmitting to the client node a part of content during the determined time window.

In a fourth aspect of the invention a method is provided for (streaming) content (video and/or audio) transmission comprising at a client node the steps of: determining a control signal indicating the client nodes requested throughput; transmitting said control signal to a server node, performing a network control method to determine a time window for transmitting information, the control method further comprising a network congestion avoidance control method, based on said control signal; receiving at the client node a part of content during the determined time window.

Any of the embodiments of the client and/or server nodes (or related control methods) discussed above has corresponding method steps.

In a fifth aspect of the invention a computer program product is provided, operable on a processing engine, for executing any of the computations in the client nodes and/or the server nodes and/or any of the steps of the methods.

In a sixth aspect of the invention a non-transitory machine readable storage medium is provided for storing the computer program products described above.

Although nodes, network, methods, computer program products and storage media have been described hereinabove as separate aspects, this is done for clarity purposes only, and it should be noted that features described only in connection with one aspect may be applied in the other aspect according to the present invention to obtain the same technical effects and advantages, and vice versa.

### Brief description of figures

Some embodiments of the systems, nodes or devices and/or methods in accordance with embodiments of the present invention are now described, by way of example only, and with reference to the accompanying drawings, in which:
Figure 1 show the operation of HTTP Adaptive Streaming in accordance with the prior-art;
Figure 2 shows the effect of embodiments of the invention in HTTP Adaptive Streaming;
Figure 3 compares a traditional approach and an approach according to embodiments of the invention;
Figure 4 shows an embodiment of the content delivery system and the signals exchanged.

### Detailed description of embodiments

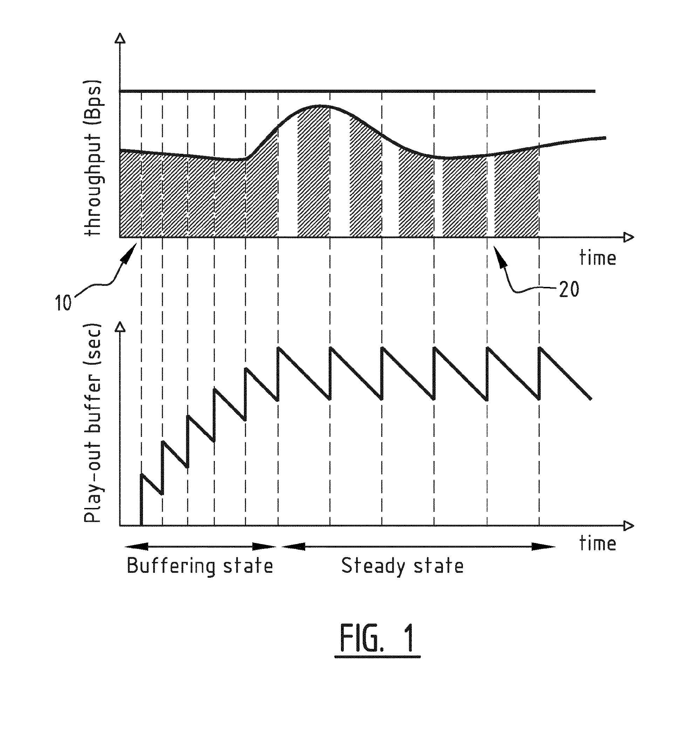

The design principle of HAS are as follows (see Figure 1). The video is encoded at different bit rates and the client can switch between these bit rate versions at specified moments in times. How the video is encoded is described in a manifest file that is transported to the video client prior to downloading video data (and that may be updated later). The interval of video between two consecutive possible switching times is denoted a video segment and the associated bit strings (one bit strings per available quality versions) with that interval as chunks. Hence, there are as many chunks associated with each video segment as there are quality versions. In the existing implementations (e.g., Apple Live Streaming, Silverlight Smooth Streaming, Adobe Dynamic Streaming), the chunks are downloaded via consecutive HTTP GET requests which travel over one or more TCP (Transport Control Protocol) connections. In order to select which chunk to download for the next video segment, the client (1) monitors the available network throughput, in particular the throughput offered by TCP, it sees for the download of previous chunks and (2) tries to match the video bit rate (for the next chunk) to this available network throughput. Because the requested video bit rate cannot match the available network bit rate exactly the client needs to maintain a play-out buffer.

Current implementations request the next chunk when the previous one is completely arrived and typically operate in one of two states: (1) in the "buffering state" (when the play-out buffer is small) chunks are requested back to back which leaves only a small gap between two consecutive chunks (basically of one RTT (Round Trip Time)), (2) while in "steady-state" (when the play-out buffer fluctuates around a target level), the traditional client often leaves large gaps between consecutive chunks to keep the buffer around that target level. Notice that during these (small or large) gaps the sender has nothing to send (as the request for the next chunk did not arrive yet).

TCP is a sliding window and ACK (ACKnowledgment) based congestion control mechanism. The TCP sender maintains a window, which is the amount of information that it sends unACKed in the network. The TCP receiver acknowledges packets that it receives, thus advancing the sliding window. The throughput that TCP attains is roughly equal to the TCP window divided by the RTT. The TCP window that the sender maintains, is the minimum of the congestion window (CWND) and the announced window (AWND): CWND is determined by TCP's congestion control algorithms, which run in the TCP sender, (and each TCP version has its own mechanisms, e.g., TCP newRENO uses an additive increase, multiplicative decrease algorithm), while AWND is transported from the receiver to the sender in the ACKs. In the current implementations AWND is usually chosen so large that it has no impact. As a consequence nowadays the TCP window is mainly driven by its congestion avoidance mechanisms. The congestion avoidance mechanisms in TCP were primarily designed with sources that have always data to send in mind. The (large) gaps introduced by current HAS clients (see Figure 1) confuse TCP in the sense that its window (which as explained above is equal in the current state-of-the-art to CWND) does not reflect the level of congestion in the network, and this leads to inefficiencies. Two examples of such inefficiencies are as follows: (1) Just after a long enough gap TCP is allowed to send a full window (CWND) of packets into the network. This burst of packets may overrun buffers (especially when CWND does not reflect the congestion in the network), leading to (huge amounts of) packet loss, and hence a TCP throughput lower than it could be. (2) Longer gaps may lead to a TCP (RTO (retransmit Time-Out)) timer expiring, which, in turn, may lead (certain flavors of) TCP to reduce its congestion window to 1 (or a small value), and it takes time to rebuild CWND.

Three kinds of solutions were proposed to solve this inefficiency problem:
*1. Solutions that tweak TCP and make it less prone* to the *gaps the HAS client leaves.* In current implementations the value of CWND after a gap is either too large (because congestion levels have changed during the gap or because at the beginning of a new chunk download TCP sends a burst of information in the network equal to CWND and the buffers cannot absorb this burst) or too small (because the TCP time-out timer expired). Although these TCP tweaks help a bit in some circumstances, it is difficult to design a method that is beneficial in all circumstances (e.g., for video and data sources).
2. *Solutions in the network under the form of shapers.* These shapers can decrease the large gaps between consecutive downloads of chunks, but they also have an impact on the throughput that the client observes and in turn this may lead to the client being less inclined (than in case without a shaper) to choose a higher bit rate video chunk for the next video segment. Moreover, for these techniques to work properly the shaper needs to be aware of the client choices (to shape at an adequate bit rate).
3. *Pipelining HTTP GET requests.* Chunks for more than one consecutive video segment are requested at the same time, such that fewer (small) gaps result. This essentially boils to using larger video intervals and results in an algorithm that is less able to follow throughput fluctuations. This technique can only solve problems associated with small gaps.

Recall that the object of the invention is to provide a TCP friendly solution, in that the RDA (rate decision algorithm), which runs over TCP is denoted here as TCP friendly in the sense that it avoids gaps and thus does not confuse TCP so that it is able to grab the goodput that another TCP source that has no gaps would grab.

Embodiments of the invention propose specialized nodes, methods executed on such nodes, network with such nodes and related software (and storage media thereof) for use in content delivery system. In particular, the network between the client and the server may include a wireless link (e.g., an IEEE 802.11 WLAN (Wireless Local Area Network) link, a mobile link such as UMTS (Universal Mobile Telecommunication System?), 3G, LTE (Long Term Evolution), ...) and/or a wired link (e.g. an IEEE 802.3 "Ethernet" link, a PLC (Power Line Communication) link, an xDSL (Digital Subscriber Line) link, a coax link, etc.).

Embodiments of the invention are now demonstrated in the context of HAS and video content delivery but are not limited thereto.

The underlying network is a packetized data based network like IP (Internet Protocol)-based networks, for instance supporting HAS (HTTP (Hyper Text Transport Protocol) Adaptive Streaming). This method relies on TCP (Transport Control Protocol) and HTTP infrastructure. The video is encoded at different bit rates and the client can switch between these bit rate versions at specified moments in times. Typically the chunks (video segment encoded in accordance with a certain bit rate) are downloaded via consecutive HTTP GET requests which travel over one or more TCP (Transport Control Protocol) connections.

Figure 1 shows the two stage (buffering, steady state) approach in HTTP adaptive streaming (used in the prior-art but also in embodiments of the invention, be it that in embodiments of the invention in the operation those stages can hardly be distinguished as precisely the large gap effect in the steady state is overcome). In the buffering state there is hardly a gap, called a small gap; just between the last packet arrival of the previous chunk send and the request for next chunk arriving (10) while in the steady state a large voluntary gap (20) is left to keep the buffer under control. The large gaps between requested chunk confuses TCP with as consequence that the available throughput is less than it can be.

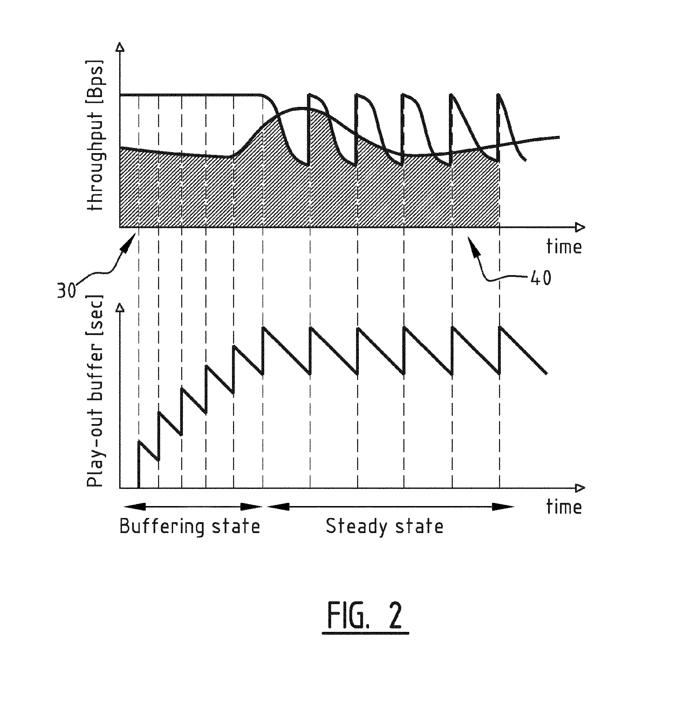

As the (large) gaps introduced by current HAS clients (see Figure 1) confuse TCP in the sense that its window (which as explained above is equal in the current state-of-the-art to CWND) does not reflect the level of congestion in the network, leading to inefficiencies, embodiments of the invention provides approaches to ensure that there are no large gaps between chunks in steady state, thus avoiding this form of inefficiency of HAS. More generally speaking the confusion of TCP comes with the gaps are larger than one or more TCP RTT (depending on the methods), so it is sufficient to ensure that the gaps are smaller than this reference. On the contrary, in traditional HAS large gaps are needed as otherwise the play-out buffer would increase unboundedly. So, to keep the play-out buffer level under control, while at the same time avoiding these large gaps, embodiments of the invention propose a method, in particular a software, and adapted nodes based on TCP's flow control mechanism or the like. In particular, the HAS client in embodiments of the invention sets the value of AWND, which the client sends in the ACKs to the server, to an appropriate value, such that over the time scale of a video segment the video bit rate matches the throughput. However, deliberately setting AWND to an appropriate value will hamper TCP to "sense" the available throughput. Therefore, preferably AWND is only set over the last part of the interval to download the chunk. Over the first part of that interval AWND is set to a large value and CWND determines the throughput (see Figure 2). The HAS client only measures the throughput over the interval where CWND is dominant to determine what the available throughput is. Embodiments of the invention are preferably combined with the prior art solution of pipelining requests for solving the small gaps problems. As discussed this pipelining technique cannot solve the problems associated with large gaps.

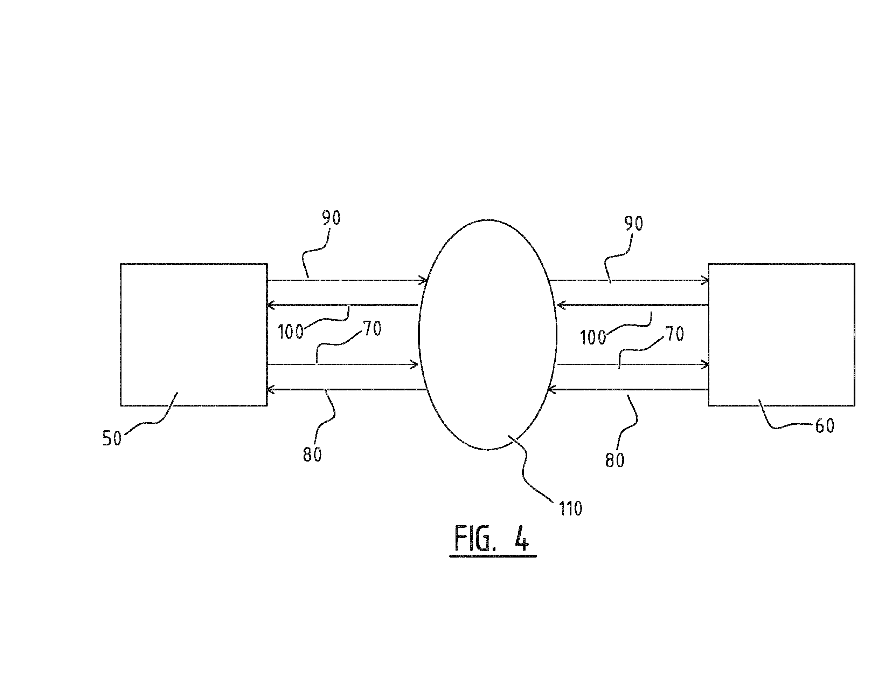

Figure 2 shows the effect of the altered TCP flow, in that voluntary gaps are avoided. Note that in the buffering state (30) the small gap behavior is not altered but by using prior-art pipelining techniques this could be avoided. In the steady state (40) we observe no more voluntary gaps. Moreover for each segment (or optionally a plurality of segments) we see a two part behavior, being a part wherein the available throughput dominates and another part wherein the requested throughput dominates. Figure 4 shows the client node (50), the server node (60), the network (110), the requests issued by the client (70), the traffic (80) and the control information exchanged, in particular the control signal (90) from client to server and optionally an additional signal (100) from server to client.

More generally speaking while using the network control method based on TCP, in particular the network congestion avoidance part thereof, operates now in part on a control signal provided by the electronic client node, more in particular this control signal somehow is indicative for the client nodes requested throughput to said server node (running the network control and network congestion avoidance part thereof), hence said control signal is such that it is suited for use in said network congestion control method, in particular a dynamic use (varying between a varying value (determined at client side) and a fixed number, and hence actively used (in that its availability does change the course of action of the network congestion avoidance method).

The functions of processing engine, being part of either one of the nodes may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term processor should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

A more exemplary embodiment is now described. Recall that the video bit rate is the rate at which the video is played out. It is characteristic of HAS that there are various quality versions, and hence, various video bit rates to choose from. The (state-of-the-art) RDA (rate decision algorithm) selects the video bit rate (i.e., the quality version) such that it equals the goodput averaged over a long time, but since it does not control the goodput in any way, this average goodput comes about by having a value larger than the video bit rate over a some part of the period (i.e., video segment duration or an integer multiple thereof) and a gap (where the goodput is zero). The invention uses a similar RDA, but on top of that RDA, it impacts the goodput by setting the AWND. So, in the invention still the video bit rate equals the goodput averaged over a long time, but now this average comes about by have a value larger than the video bit rate (to probe the network what is available) over a shorter period (than in the prior art) and having it over the rest of the period less than the video bit rate, but NOT 0(that is what avoiding the gap means). So, both in the prior art and in the invention, in steady state, the goodput averaged over a long time is equal to the selected video rate (if that were not the case a play-out buffer would be continuously increasing or decreasing and this is not the case in HAS: in steady state this play-out buffer only fluctuates somewhat), but the difference is that with the invention the goodput fluctuates less than in the prior art: it is more stable and this stability yield a better efficiency and TCP will be less confused and the goodput a client will get from the network is likely to be higher than with prior art solutions.

A more exemplary embodiment is now described in more detail.

Let L be the number of levels the video is encoded in, level 1 has associated nominal (i.e., average) bit rate B₁ (B₁<B₂< ...<B_{L}) (in [bit/sec]). More generally speaking the content (video and/audio) are available in one or more versions. Let K be the number of video segments, k=1 is the first video segment and k=K is the last video segment of the video. For live content K may be infinity. In general each video segment can be of different duration Tₖ (in [sec]) but usually they all have about the same value (typically 2sec to 10sec). More generally speaking the content transmission is performed on a per part basis.

Let C_{k,l} be the size of 1-th chunk associated with the k-th video segment. These values can be either specified in the manifest file (which is a preferred option for this invention) or can be approximated as C_{k,l}= Bₗ·Tₖ, but due to variable bit rate encoding, this relation is only approximate.

Let tₖ be the time (on the client's clock) at which a chunk (part of a video segment in a particular version) associated with video interval k is requested, i.e., the time at which the HTTP GET for that chunk is issued, and t₁=0sec, and let uₖ and vₖ be the time (on the client's clock) that the *last* packet associated with that chunk arrives at the receiver for a traditional HAS client and for the HAS client of this invention respectively. In the buffering state uₖ=vₖ (as outlined before said use of said control signal in said control method becomes operational only in steady state) and the time between tₖ₊₁ and uₖ is very small: that difference is the time the HAS client takes to make a decision on which chunk to download next. (Note that if pipelining would be used, again a preferred embodiment) to improve the traditional HAS client, time instant tₖ₊₁ would be chosen such that is just smaller than uₖ). For a traditional HAS client in steady state the difference between tₖ₊₁ and uₖ is the large gap after downloading chunk k. In this invention we avoid the large gaps, even in steady state. In fact, the difference between tₖ₊₁ and vₖ is chosen very small (i.e., the nature of these gaps is exactly the same as the nature of the gaps in buffering state), but we aim to make vₖ (>uₖ) such that the buffer in steady state does not increase unboundedly. Indeed the use of the control signal is to ensure that the time gap between the transmitting of said parts of content is reduced, in order to have small time gaps, preferably the same as in the buffering state. Obviously small is a relation notion, therefore a reference is to compare with the time-out defined by the network control method, as it is this control methods operation that we target to maintain (as it gets precisely confused by large gaps).

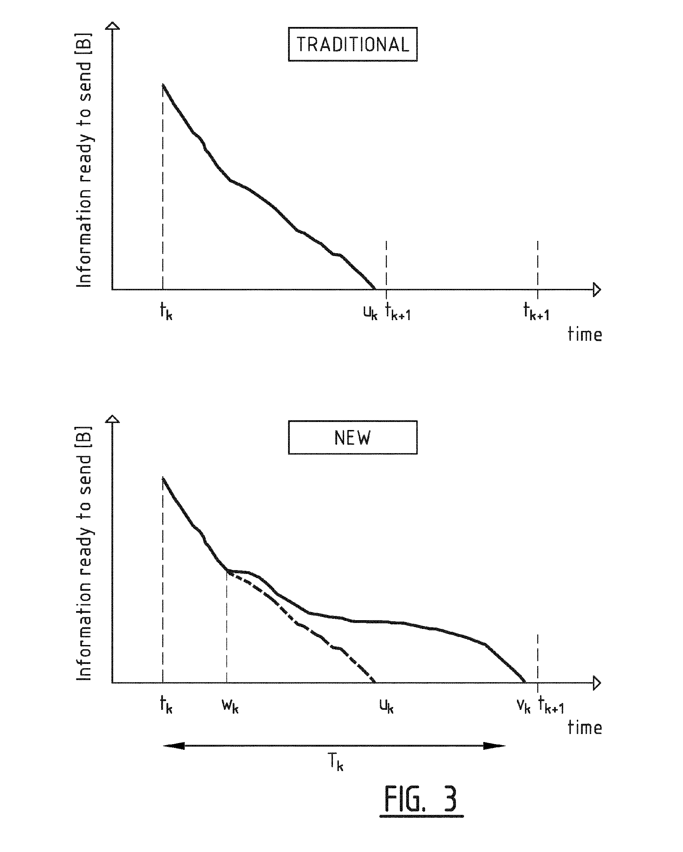

A further exemplary implementation is now discussed. The client continuously maintains four variables, i.e., the AWND(t) and CWND(t), the play-out buffer level T(t) (in [sec]) and the measured accumulated goodput G(t) (in [bits/sec]). These variables are updated in the following way. While AWND(t) is known to the client (as it determines it itself), CWND(t) can be either updated with the same logic as the server updates it, i.e., the congestion control algorithms are implemented at the client side or the sender can communicate CWND(t) it uses to the client as side information. These windows are updated each time a packet (either a regular packet or a message from the server containing the CWND) arrives. The play-out buffer level is updated as follows. Prior to t=v₁(=u₁), T(t)=0. Immediately after t=v₁(=u₁) T(t)=T₁ and the video starts to be played out. In interval ]vₖ₋₁,vₖ[ (k>1), T(t+dt)=T(t)-dt, which reflects that during a small interval an amount dt of video information is played. At t=vₖ (k>1), T(t) is increased by Tₖ. Notice that from the time instant (immediately after) vₖ₋₁ to the time instant (immediately after) vₖ the play-out buffer increased by an amount Dₖ=Tₖ-(vₖ-vₖ₋₁), k>1. During buffering state (when uₖ=vₖ) the chunks are selected such that Dₖ>0 so that the play-out buffer tends to increase. However, during steady state Dₖ should be kept around 0. The accumulated goodput G(t) is measured by inspecting the sequence numbers of the arriving TCP packets and is updated each time the TCP algorithm in the client sends an ACK with the sequence number the ACK carries. Note that the goodput g (i.e., the useful amount of bytes received) over any interval [t,w[ (w>t) is then given by g=(G(w)-G(t))/(w-t). Based on these four variables the HAS client of this invention makes all its decisions. As in the traditional cases there are two states in the HAS client: a buffering state and a steady state. The algorithm to decide to switch from buffering state to steady state and vice versa in the HAS client of embodiments of the invention can be the same in traditional HAS clients. The *buffering state* of the HAS client is not altered by this invention (uₖ=vₖ): during buffering state the value of 1 for the k-th interval is chosen such that the expected increase in play-out buffer level Dₖ in the interval ]vₖ₋₁,vₖ] is large enough. In that way the play-out buffer fills up. During steady-state (e.g., when a play-out buffer level is larger than a threshold value) the expected increase in play-out buffer level Dₖ in the interval ]vₖ₋₁,vₖ] is kept around 0. This is achieved with the following steps. At tₖ the following decisions are made. First, the expected goodput hₖ over the interval where cwnd(t) dominates in the k-th interval is determined as follows: the HAS client measures the goodputs gᵢ=(G(wᵢ)-G(tᵢ))/(wᵢ-tᵢ) (i<k) associated with previous video intervals i. Notice that it only measures over the part of the interval [tᵢ,wᵢ] where CWND(t) dominates. Based on these values gᵢ the HAS client predicts hₖ, e.g., by making for hₖ an weighted average of the gᵢ-values. The second step is very similar to the one of a traditional HAS client: based on this predicted goodput hₖ (and possibly also based on the buffer level T(tₖ)) the HAS client decides the level of the next chunk. One example algorithm could be to choose the largest value 1 that still has Rₗ<hₖ. As third step, the interval over which the goodput gₖ in interval k is to be measured is determined: in particular the time instant wₖ (see Figure 3) is determined where the domination of CWND(t) ends, i.e., from which time onwards AWND(t) should be set smaller than CWND(t). One example procedure for this is wₖ=tₖ+f· C_{k,l}/hₖ where hₖ is the predicted goodput (discussed above) and f is a positive value smaller than 1. Notice that f is preferably chosen conservatively such that wₖ is with very high probability smaller than uₖ. If wₖ>uₖ, the chunk k would be downloaded at time prior to wₖ, i.e., at time vₖ=uₖ (and since we allow no large gaps tₖ₊₁ is only just larger than vₖ), and hence, Dₖ is positive. Finally, in the interval ]wₖ ,vₖ[ AWND(t) is set such that SDₖ (where the sum runs over all intervals in the current steady state) is kept as close to 0 as possible.

Figure 3 illustrates the new control method for an embodiment wherein granularity used to determine AWND, is equal to the one of the RDA, being the segment size: that is the new control method determining AWND runs during each segment. The same granularity is not needed: it could be that the granularity of the new method that set AWND, runs with a granularity of 2 or 3 (or an integer) times the segment size.

Generally speaking in the above control like communication of the control signal (AWND (t)) from the client node to the server node is observed and optionally control like communication from the server node to the client node (CWND(t)). Further one observes that the use of said control signal enables said network congestion avoidance control method to operate based on both the available throughput in the network and the throughput requested by the client node, as both information is used. Moreover the control signal is used only during a portion of said time window (said portion being of variable duration) to establish that said control method operates on a client node requested throughput basis while during the other portion of said time window said control method operates on available throughput basis and said client node is adapted to also determine the duration (the time instant wₖ) of said portion of said time window. In an exemplary embodiment hence the use of ACKs from client to server wherein AWND is set to reflect the video rate is provided. In another exemplary embodiment use of an (a typical) smooth stream of packets in HAS context (instead of intervals with lots of traffic, alternated with periods of silence) is provided.

## Claims

1. An electronic client node (50) suited for use in a streaming content delivery system, and adapted for
- receiving transmitted information (80) at request (70) from at least one server node (60) via a telecommunication network (110);
- transmitting information related to a part of content during a time window into the network, the duration of said time window being determined by a network control method, further comprising a network congestion avoidance control method;
- transmitting a control signal (90) to thereby indicate a measure of its average requested throughput, preferably to said server node, said control signal being suited for use in said network congestion control method.

2. The client node of claim 1, further being adapted to generate said control signal such that the use of said control signal ensures that the time gap between the transmitting of said parts of content is less than the time-out defined by the network congestion avoidance control method.

3. The client node of claim 1 or 2, further being adapted to generate said control signal such that the use of said control signal enables said network congestion avoidance control method to operate based on both the available throughput in the network and the throughput requested by the client node.

4. The client node of claim 2 or 3, further being adapted to generate said control signal such that the use of the control signal is selected such that the bit rate required for said part of content converges to the client goodput on average over the duration of the time window.

5. The client node of any of the previous claims, further being adapted to continuously maintain at least (a) a first signal, used as said control signal, representative for the by the client requested content bit rate; and (b) a second signal; representative for the available throughput, whereby the first signal being determined by the client node, the second signal either being determined by the client node or received from an external node, preferably the server node (100).

6. The client node of any of the previous claims, further being adapted to generate the control signal that can be used in said control method only during a portion of said time window to establish that said control method operates on a first node requested throughput basis while during the other portion of said time window said control method operates on available throughput basis, optionally the client node is further adapted for determining the duration of said portion of said time window.

7. A streaming content delivery system comprising: (1) a telecommunication network, connecting directly or indirectly at least a server node and a client node ; (2) at least one server node of said at least one server nodes is adapted for transmitting a part of content during a time window into the network, the duration of said time window being determined by a network control method, said network control method further comprising a network congestion avoidance control method; (3) at least one client node of said at least one client nodes is adapted for receiving said part of content and further being adapted for transmitting a control signal to thereby indicate a measure of its average requested throughput, preferably to said one server node of said at least one server nodes, said control signal is used in said network congestion avoidance control method.

8. The system of claim 7, further being adapted in that the use of said control signal ensures that the time gap between the transmitting of said parts of content is less than the time-out defined by the network congestion avoidance control method.

9. The system of claim 7 or 8, further being adapted in that the use of said control signal enables said network congestion avoidance control method to operate based on both the available throughput in the network and the throughput requested by the client node.

10. The system of claim 8 or 9, further being adapted in that the use of the control signal is selected such that the bit rate required for said part of content converges to the client goodput on average over the duration of the time window.

11. The system of any of the previous claims, further being adapted in that the control signal is used in said control method only during a portion of said time window to establish that said control method operates on a first node requested throughput basis while during the other portion of said time window said control method operates on available throughput basis, optionally the client node is further adapted for determining the duration of said portion of said time window.

12. Method for streaming content transmission comprising, at a server node: receiving from a client node a control signal indicating a measure of its average requested throughput; performing a network control method to determine a time window for transmitting information, the network control method further comprising a network congestion avoidance control method based on said control signal; transmitting to the client node a part of content during the determined time window.

13. Method for streaming content transmission comprising, at a client node: determining a control signal indicating a measure of the client nodes average requested throughput; transmitting said control signal, preferably to a server node, performing a network control method to determine a time window for transmitting information, the control method further comprising a network congestion avoidance control method, based on said control signal; receiving at the client node a part of content during the determined time window.

14. A computer program product, operable on a processing engine, for executing any of the computations in the client nodes of claims 1 to 6 and/or the server nodes of claims 7 to 11 and/or any of the steps of the methods 12 or 13.

15. A non-transitory machine readable storage medium storing the computer program products of claim 14.
